# EUROPÄISCHE PATENTSCHRIFT

(11) **EP 3 370 983 B1**
(45) Veröffentlichungstag und Bekanntmachung des Hinweises auf die Patenterteilung: **15.05.2019**
(21) Anmeldenummer: 16794239.0
(22) Anmeldetag: 02.11.2016
(51) Int. Cl.: B60C 23/00

(54) **RADVENTILANORDNUNG SOWIE REIFENDRUCKREGELANLAGE MIT WENIGSTENS EINER SOLCHEN RADVENTILANORDNUNG**
WHEEL VALVE ARRANGEMENT AND TIRE PRESSURE CONTROL SYSTEM HAVING AT LEAST ONE SUCH WHEEL VALVE ARRANGEMENT
ENSEMBLE DE SOUPAPE DE ROUE ET SYSTÈME DE RÉGULATION DE PRESSION DE PNEUMATIQUE COMPRENANT AU MOINS UN TEL ENSEMBLE DE SOUPAPE DE ROUE

(30) Priorität: 04.11.2015 DE 202015105859 U
(43) Veröffentlichungstag der Anmeldung: 12.09.2018
(73) Patentinhaber: PTG Reifendruckregelsysteme GmbH, 41468 Neuss (DE)
(72) Erfinder: LINZBACH, Martin, 41468 Neuss (DE)
(74) Vertreter: Haverkamp, Jens
(86) Internationale Anmeldenummer: PCT/EP2016/076327
(87) Internationale Veröffentlichungsnummer: WO 2017/076849

(56) Entgegenhaltungen:
- EP-A1- 0 387 495
- US-A1- 2015 174 972

## Beschreibung

Die Erfindung betrifft eine Radventilanordnung für eine Reifendruckregelanlage eines Fahrzeuges, welche Radventilanordnung ein pneumatisch schaltbares Radventil und ein nach dem Prinzip einer Druckwaage arbeitendes Wechselventil als Entlüftungsventil umfasst dessen Regeleingang an einen zu dem Reifeninneren führenden Reifenanschlusskanal und dessen Eingang als Steuereingang an eine Luftversorgungsleitung anzuschließen sind, wobei die Radventilanordnung die weiteren Merkmale des Oberbegriffs des Anspruchs 1 umfasst. Ferner betrifft die Erfindung eine Reifendruckregelanlage mit einer solchen, jedem einen luftbefüllbaren Reifen tragenden und an die Reifendruckregelanlage angeschlossenen Rad zugeordneten Radventilanordnung.

Reifendruckregelanlagen werden bei Kraftfahrzeugen, etwa bei Nutzfahrzeugen, wie Lastkraftwagen, Schleppern, Traktoren oder Erdbewegungsmaschinen und auch bei nicht angetriebenen Fahrzeugen, wie beispielsweise Anhängern eingesetzt, um den in den Reifen befindlichen Reifendruck an unterschiedliche Betriebssituationen anpassen zu können. Eine Reifendruckanpassung erfolgt vornehmlich in Abhängigkeit von dem zu befahrenden Untergrund. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Ebenfalls empfiehlt es sich, den Reifeninnendruck und somit die Reifenbefüllung an den jeweiligen Beladungszustand des Fahrzeuges anzupassen. Eine Reifeninnendruckanpassung kann bei fahrendem Fahrzeug erfolgen. Durch eine optimierte Anpassung des Reifeninnendruckes können in Abhängigkeit von dem Untergrund der Rollwiderstand und der Reifenverschleiß nicht unerheblich reduziert werden. Zudem führt ein optimal eingestellter Reifeninnendruck zu einem spürbar reduzierten Kraftstoffverbrauch.

Derartige Reifendruckregelanlagen verfügen über eine Drehdurchführung als Luftübertragungswegsamkeit zwischen den fahrzeugseitigen Einrichtungen der Reifendruckregelanlage und den dazugehörigen radseitigen Aggregaten. Somit wird beispielsweise zum Erhöhen des Reifeninnendruckes Druckluft von einer fahrzeugseitigen Druckluftquelle durch die Drehdurchführung hindurch an das drehbar gelagerte Rad übertragen. Gleiches gilt im umgekehrten Falle eines gewünschten Absenkens des Reifeninnendruckes, wenn keine radseitige Reifenentlüftung vorgesehen ist.

Eine solche Drehdurchführung umfasst einen fahrzeugseitig angeordneten Stator und einen durch einen Bewegungsspalt von diesem getrennten, radseitig angeordneten Rotor. Stator und Rotor sind typischerweise koaxial zur Drehachse des Rades angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen (Druckdichtungen), wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge führende Luftleitung vorgesehen. Diese durchgreift die Felge in einer Öffnung und mündet in das Reifeninnere. In die radseitige Luftleitung ist ein ansteuerbares Ventil - ein Radventil - eingeschaltet, welches für den Vorgang der Reifendruckregelung geöffnet und nach Abschluss des Vorganges geschlossen wird. Die Druckluft selbst wird bei einem Kraftfahrzeug typischerweise mit einem fahrzeugseitig angeordneten Kompressor als Druckluftquelle bereitgestellt. Als Kompressor dient zumeist der bei derartigen Fahrzeugen ohnehin zum Betreiben der Bremsanlage vorhandene Kompressor.

Aus DE 20 2013 105 026 U1 ist eine Radventilanordnung für eine Reifendruckregelanlage gemäß dem Oberbegriff des Anspruchs 1 bekannt. Diese Radventilanordnung umfasst ein an die von der Drehdurchführung dem Rad zugeführte Luftversorgungsleitung angeschlossenes Radventil, dessen Ausgang an den Eingang eines nach dem Prinzip einer Druckwaage arbeitenden Wechselventils angeschlossen ist. Das Wechselventil ist bei diesem Stand der Technik als Schnellentlüftungsventil ausgelegt. Die Regelseite des Schnellentlüftungsventils steht in Fluidverbindung mit dem Reifeninneren. Geschaltet wird das Radventil über eine separate Druckluft beaufschlagbare Steuerleitung. Dem zur Folge kann eine solche Radventilanordnung nur im Zusammenhang mit einer zweikanaligen Drehdurchführung eingesetzt werden.

Aus US 2015/0174971 A1 ist ein intelligentes Reifendruckregelungssystem bekannt.

Eine Radventilanordnung mit den Merkmalen des Oberbegriffs des Anspruchs 1 ist aus EP 0 387 495 A1 bekannt. Um eine bestimmungsgemäße Verstellbarkeit des Steuerkolbens zu gewährleisten, muss dieser bzw. seine Kolbenstange geführt sein. Vor dem Hintergrund des im Durchmesser gegenüber der Kolbenstange deutlich größer ausgelegten Steuerkolbens muss der Steuerkolben eine gewisse Dicke aufweisen und die Kolbenstange über eine entsprechende Länge geführt sein, wenn Verkantungen vermieden werden sollen. Eine derartige Führung bzw. Lagerung des Steuerkolbens träge jedoch zur benötigten Bauhöhe nicht unerheblich bei.

Ausgehend von diesem diskutierten Stand der Technik liegt der Erfindung daher die Aufgabe zugrunde, eine eingangs genannte Radventilanordnung dergestalt auszubilden, dass trotz Vorhandenseins eines schaltbaren Radventils als Teil der Radventilanordnung zum Ansteuern desselben und für die gewünschte Reifendruckregelung nur eine einkanalige Drehdurchführung benötigt wird, dass daher die Drehübertragung in denjenigen Phasen, in denen keine Druckluft übertragen wird, drucklos sein kann und dennoch der Steuerkolben, ohne diesen zum Zwecke seiner Lagerung länger auslegen zu müssen, verkantungsfrei geführt ist.

Gelöst wird diese Aufgabe erfindungsgemäß durch eine eingangs genannte, gattungsgemäße Radventilanordnung, bei der die Kolbenstange in einem den Steuerkolben tragenden Abschnitt eine zentrische Führungsbuchse aufweist, in die ein gegenüber der Bewegung der Kolbenstange ortsfester Führungszapfen zur Lagerung der Kolbenstange eingreift.

Diese Radventilanordnung umfasst ein schaltbares Radventil und ist dergestalt ausgelegt, damit dieses mit dem in der Luftversorgungsleitung anstehenden Zieldruck (Solldruck), mit dem der von dem Rad getragene Reifen gefüllt sein soll, aus seiner Geschlossenstellung in seine Offenstellung schaltbar ist. Dieses bedeutet, dass das Radventil bereits bei dem für den von dem Rad getragenen Reifen vorgesehenen Mindestluftdruck öffnet. Dadurch ist sichergestellt, dass das Radventil unabhängig von der Spanne des Reifeninnendruckes, mit dem der Reifen gefahren werden soll, öffnet. Vorzugsweise öffnet das Radventil bereits bei einem Druck, der etwas unterhalb des vorgesehenen minimalen Reifenfülldruckes liegt. Bei dem Mindestreifenfülldruck kann es sich um einen solchen handeln, der aufgrund eines bestimmten Einsatzes des Reifens vorgeben ist. Hierbei kann es sich auch um den Mindestfülldruck handeln, bei dem der Reifen, ohne Beschädigungen hinnehmen zu müssen, noch gefahren werden kann. In diesem Fall handelt es sich um den herstellerseitig angegebenen Mindestfülldruck.

Zum Öffnen des Radventils, bei welchem Vorgang der Ventilkörper von seinem Ventilsitz abgerückt wird, erfolgt dieses gegen die Kraft zumindest eines Rückstellelementes, typischerweise einer Rückstellfeder oder eines Rückstellfederpaketes, und unter Umständen auch gegen den im Reifeninneren herrschenden höheren Druck, und zwar dann, wenn eine Reifenentlüftung vorgesehen ist. Um eine Öffnungsbewegung des Radventils trotz Vorhandensein eines unter Umständen relativ geringen Druckes in der Luftversorgungsleitung zu gewährleisten, können unterschiedliche hydraulische Kraftuntersetzungen genutzt werden. In einem Ausführungsbeispiel ist vorgesehen, dass der Kolbenboden des Steuerkolbens relativ groß ist, verglichen mit dem Durchmesser des Ventilkörpers. Bei dieser Konzeption wird der Umstand genutzt, dass durch die fahrzeugseitige Luftversorgung zum Schalten des Radventils eine große Luftmenge bereitgestellt ist. Schließlich ist diese ausgelegt, in kurzer Zeit 1000 Liter und mehr zu fördern. Insofern kann die Steuerkammer des Steuerzylinders, die an die Luftversorgungsleitung angeschlossen ist, eine relative große Querschnittsfläche aufweisen, ohne den Schaltvorgang zu beeinträchtigen.

Der in der Luftversorgungsleitung anstehende Druck liegt auch an der Eingangsseite des Wechselventils, als nach dem Prinzip einer Druckwaage arbeitendes Wechselventil ausgelegt, an. Dieser Druck ist für die Zwecke einer Ventilschaltung regelmäßig größer als der Umgebungsdruck. Ist das Radventil durch den in der Luftversorgungsleitung anstehenden Druck geöffnet, ist die Regelseite des Wechselventils mit dem im Reifeninneren herrschenden Luftdruck beaufschlagt. Ist dieser größer als der in der Luftversorgungsleitung Anstehende, erfolgt eine Entlüftung des Reifens über eine Entlüftungsöffnung des Wechselventils. Das Wechselventil schaltet bei einer solchen Druckbeaufschlagung seiner Eingänge in seine Entlüftungsstellung, bis in Folge eines sich einstellenden Druckgleichgewichtes das Schnellentlüftungsventil wieder schließt. Im Falle einer Reifenbefüllung ist der in der Luftversorgungsleitung anstehende Druck größer als der im Reifeninneren. Folglich bleibt dann das Schnellentlüftungsventil in seiner Geschlossenstellung bezüglich einer Entlüftung. Durch das geöffnete Radventil wird dann das Reifeninnere befüllt. Nach Abschluss des Reifenbefüllungs- oder -entleerungsvorganges wird die Luftversorgungsleitung drucklos geschaltet, womit das Radventil schließt. Das Schließen des Radventils erfolgt federkraftunterstützt. Damit ist sichergestellt, dass das Radventil auch bei einem nur geringen Reifenfülldruck sicher geschlossen ist. Somit wird bei dieser Radventilanordnung in geschickter Weise ein nach dem Prinzip einer Druckwaage arbeitendes Wechselventil genutzt, um aktiv das Radventil schalten zu können, ohne dass hierfür zusätzliche Aktoren, insbesondere solche, die angesteuert werden müssten, benötigt werden. Das Wechselventil schaltet sich in Abhängigkeit von dem gewünschten Zieldruck und dem aktuell im Reifeninneren herrschenden Druck selbsttätig in die zum Einstellen des Zieldruckes im Reifeninneren notwendige Schaltstellung.

Vorteilhaft ist eine Ausgestaltung, bei der das Wechselventil als Schnellentlüftungsventil ausgelegt ist. Ein solches Schnellentlüftungsventil verfügt über einen hinreichend großen Entlüftungsquerschnitt, sodass eine Reifenentleerung in kurzer Zeit vorgenommen werden kann.

Von Vorteil ist bei einer solchen Radventilanordnung zudem, dass keine zusätzlichen Maßnahmen zum Gewährleisten eines Notbetriebes bei einem Leitungsabriss bereitgestellt werden müssen. Der besondere Vorteil liegt bei der Verwendung eines solchen Radventilanordnung jedoch darin, dass die Drehdurchführung einkanalig ausgeführt werden kann und diese bei nicht gewünschter Reifenbefüllung oder Reifenentlüftung drucklos sein kann. Dieses ist bevorzugt, um einen Verschleiß der Dichtungen innerhalb der Drehdurchführung zu reduzieren. Aus diesem Grunde werden pneumatisch aktivierbare Dichtungen, so genannte Druckdichtungen, in einer solchen Drehdurchführung eingesetzt. Zudem kann eine solche Radventilanordnung sehr kompakt bauend ausgeführt sein. Das in den Reifenanschlusskanal zwischen dem Wechselventil und dem Reifenventil eingeschaltete Radventil kann mit seinem Radanschluss unmittelbar auf einen im Rad verankerten Radventilanschlussstutzen aufgesetzt werden. Typischerweise handelt es sich bei dem Radventilanschlussstutzen um denjenigen Stutzen, in den ansonsten ein handelsübliches Ventil eingeschraubt wird. Vorzugsweise bildet das Radventil mit dem vorzugsweise als Schnellentlüftungsventil ausgelegten Wechselventil eine Baueinheit, sodass nur das Schnellentlüftungsventil mit seiner Eingangsseite an eine Luftversorgungsleitung anzuschließen ist. In einem solchen Fall ist der zum Öffnen des Radventils notwendige Steuerkanal unmittelbar mit der Eingangsseite des Schnellentlüftungsventils verbunden.

In dem vorstehend beschriebenen bevorzugten Ausführungsbeispiel ist zur Bereitstellung der benötigten pneumatischen Untersetzung der Kolbenboden des Steuerkolbens des Radventils deutlich, typischerweise um ein Mehrfaches größer als der Durchmesser des Ventilkörpers. Um den Steuerkolben flach auslegen zu können und Verkantungen bei seiner Bewegung innerhalb des Steuerzylinders zu verhindern, ist vorgesehen, dass der Steuerkolben und ein Abschnitt der daran angeformten Kolbenstange eine zylindrische Führungsbuchse ausweisen, in die ein ortsfest gegenüber der Bewegung des Steuerkolbens angeordneter Führungszapfen eingreift. Die Führung der Kolbenstange im Bereich des Steuerkolbens ist bei einer solchen Ausgestaltung innenliegend. In radialer Umfangsrichtung des Steuerkolbens braucht sodann nur eine Abdichtung mit der Innenwand des Steuerzylinders, nicht jedoch notwendigerweise eine Führung herbeigeführt zu werden. Der Steuerkolben selbst ist zudem in einem zylindrischen Durchbruch gelagert, durch den dieser in den Reifenanschlusskanal zum Zwecke seiner Betätigung des Ventilkörpers eingreift.

Durch Vorsehen einer solchen innenliegenden Führung kann der Boden der Führungsbuchse zusammen mit der Stirnseite des Führungszapfens einen Anschlag bilden, durch den die maximale Rückstellposition des Steuerkolbens definiert ist. Dieser Anschlag ist abgestimmt auf die von dem Ventilkörper getragene Dichtung, sodass der durch den Boden der Führungsbuchse an der Stirnseite des Führungszapfens gebildete Anschlag, wenn überhaupt, erst zum Tragen kommt, wenn zwischen dem Ventilkörper und dem Ventilsitz die gewünschte Dichtung erreicht ist.

Das Vorsehen einer solchen innenliegenden Führung zwischen Steuerkolben und Führungszapfen kann genutzt werden, um einen durch die Kolbenstange hindurch geführten Messabgriff für eine Messung des aktuellen Reifeninnendruckes zu realisieren. Bei einer solchen Ausgestaltung ist die Kolbenstange typischerweise als Hohlstange ausgeführt. Der Hohlkanal der Kolbenstange fluchtet mit einem in den Führungszapfen eingebrachten Luftkanal, der wiederum typischerweise zu einem Messanschluss führt, an dem der Reifeninnendruck erfasst werden kann. Eine solche Ausgestaltung der Kolbenstange erlaubt auch eine Ausbildung, bei der ein in den Radventilanschlussstutzen hineinragendes Messröhrchen zu verwenden. Angeschlossen sein kann an die Kolbenstange auch ein Schlauch, dessen für die Druckerfassung offenes Ende sich innerhalb des Reifens befindet.

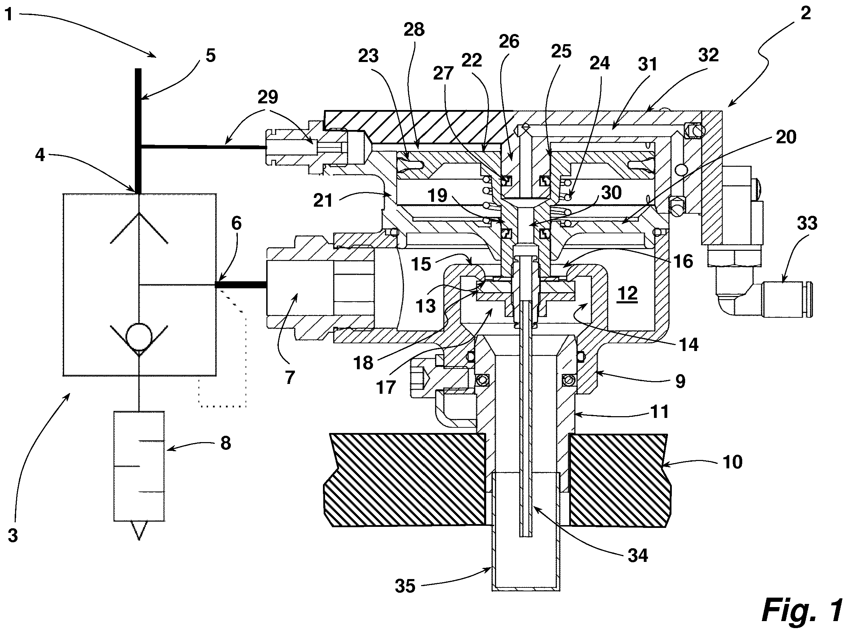

Nachfolgend ist die Erfindung anhand eines Ausführungsbeispiels unter Bezugnahme auf die beigefügte **Figur 1** beschrieben. **Figur 1** zeigt in einer schematisierten Darstellung eine Radventilanordnung 1 einer im Übrigen nicht näher dargestellten Reifendruckregelanlage. Die Radventilanordnung 1 umfasst ein Radventil 2, welches in einem Schnitt dargestellt ist, sowie ein Schnellentlüftungsventil 3, welches mit seinem Schaltsymbol gezeigt ist. Das Radventil 2 und das Schnellentlüftungsventil 3 bilden eine kompakte Baugruppe. Das Schnellentlüftungsventil 3 ist ein nach dem Prinzip einer Druckwaage arbeitendes Wechselventil. Sein Eingang 4 ist an eine Luftversorgungsleitung 5 angeschlossen. Der Regeleingang 6 des Schnellentlüftungsventils 3 ist an einen Reifenanschlusskanal 7 des Radventils 2 angeschlossen, über den eine Fluidwegsamkeit zwischen dem Regeleingang 6 und dem Reifeninneren, an den die Radventilanordnung 1 angeschlossen ist, hergestellt werden kann. Das Schnellentlüftungsventil 3 umfasst des Weiteren einen Ausblasausgang 8, aus dem im Falle einer gewünschten Reifendruckerniedrigung die aus dem Reifen über den Reifenanschlusskanal 7 abgelassene Luft in die Umgebung austritt.

Die Luftversorgungsleitung 5 ist in nicht näher dargestellter Art und Weise an eine einkanalige Drehdurchführung mit aktivierbaren Druckdichtungen angeschlossen. Fahrzeugseitig befindet sich eine Druckluftversorgung sowie eine Steuereinheit für die Reifenregelung, über welche Druckversorgung die notwendige Druckluft zum Steuern der Radventilanordnung 1 bereitgestellt wird. Übertragen wird diese von der fahrzeugseitigen Druckluftversorgung an die Radventilanordnung 1 über die vorgenannte einkanalige Drehdurchführung.

Das Radventil 2 umfasst einen Radanschluss 9, ausgeführt mit dem dargestellten Ausführungsbeispiel als Radventilanschlussstutzenaufnahme, mit der die Radventilanordnung an den in einer Felge 10 eines den Reifen tragenden Rades festgesetzten Radventilanschlussstutzen 11 angeschlossen ist. Der Radanschluss 9 ist auf das freie Ende des Radventilanschlussstutzens 11 aufgesetzt und daran festgelegt.

Das Radventil 2 verfügt über den bereits vorgenannten Reifenanschlusskanal 7, der den Regeleingang 6 des Schnellentlüftungskanals 3 mit dem Radanschluss 9 und, wenn dieser, wie in Figur 1 dargestellt, an einen Radventilanschlussstutzen 11 angeschlossen ist, mit dem Reifeninneren verbindet. Der Reifenanschlusskanal 7 ist bei dem dargestellten Ausführungsbeispiel als Winkelstück ausgeführt. In dem Bereich der Umlenkung, der durch eine ringförmige Umlenkkammer 12 bereitgestellt ist, befindet sich ein Ventilsitz 13. Der Ventilsitz 13 ist in Richtung zu dem Radanschluss 9 weisend gerichtet und wird durch eine umlaufende gerundete Kante eines zylindrischen Vorsprunges 14 bereitgestellt, wobei der Ventilsitz 13 selbst an einen in radialer Richtung nach innen gerichteten umlaufenden Steg 15 angeformt ist.

Eingefasst wird durch den Steg 15 bzw. den Ventilsitz 13 eine Ventilöffnung 16.

Mit dem Ventilsitz 13 wirkt in der Geschlossenstellung des Radventils 2 ein Ventilkörper 17 zusammen, der an seiner zu dem Ventilsitz 13 weisenden Seite eine Dichtscheibe 18 trägt. Diese weist eine gewisse Materialelastizität auf, damit zum Herbeiführen der gewünschten Dichtwirkung bei geschlossenem Radventil 2 der Ventilsitz 13 sich geringfügig in die Dichtfläche der Dichtscheibe 18 eindrücken kann. Getragen ist der Ventilkörper 17 von einer Kolbenstange 19. Die Kolbenstange 19 ist durch die dem den Ventilsitz 13 tragenden Ringzylinder 14 in Bezug auf den Radanschluss 9 gegenüberliegende Umlenkkammerwand 20 abgedichtet hindurch geführt. Außerhalb der Umlenkkammer 12 greift die Kolbenstange 19 in einen Steuerzylinder 21 ein. Die Kolbenstange 19 trägt an ihren dem Ventilkörper 17 gegenüberliegenden Ende einen Steuerkolben 22, der in radialer Richtung außenseitig mittels einer umfänglichen Kolbendichtung 23 an der Innenwand des Steuerzylinders abgestützt ist.

Figur 1 zeigt das Radventil 2 in seiner Geschlossenstellung, in der der Ventilkörper 17 an dem Ventilsitz 13 anliegt. Zum Gewährleisten eines sicheren Ventilsverschlusses dient eine Schraubendruckfeder 24, durch die die Dichtseite der Dichtscheibe 18 des Ventilkörpers 17 unter Vorspannung den dem Ventilsitz 13 anliegt. Die Schraubendruckfeder 24 stützt sich einerseits auf der von der Umlenkkammer 12 wegweisenden Seite der Umlenkkammerwand 20 und andererseits an der zu dieser Wand 20 weisenden Seite des Steuerkolbens 22 ab.

Zur weiteren Führung der Kolbenstange 19 - neben ihrer Führung in dem Durchbruch durch die Umlenkkammerwand 20 - dient eine in diese Rückseitig eingebrachte zylindrische Führungsbuchse 25, in die ein gegenüber der Bewegung der Kolbenstange 19 ortsfester Führungszapfen 26 eingreift. Der Führungszapfen 26 trägt außenseitig einen als O-Ring ausgeführten Dichtring 27 zur Abdichtung.

Der Steuerzylinder 21 ist durch den Steuerkolben 22 in zwei Kammern unterteilt, wobei eine der beiden Kammern, und zwar diejenige, die sich an der der Schraubendruckfeder 24 gegenüber liegenden Seite befindet, eine Steuerkammer 28 bildet. Zu diesem Zweck ist an die Steuerkammer eine Steuerleitung 29 angeschlossen, die ihrerseits wiederum an die Luftversorgungsleitung 5 angeschlossen ist. Wird die Steuerkammer 28 mit einem gewissen Luftdruck beaufschlagt, wird hierdurch der Steuerkolben 22 und damit die Kolbenstange 19 mit den darauf sitzenden Ventilkörper 17 längsaxial bewegt, wodurch der Ventilkörper 17 von dem Ventilsitz 13 abgehoben und das Radventil 2 geöffnet wird. Der Anschluss der Steuerkammer 28 an die Luftversorgungsleitung 5 ist bei dem dargestellten Ausführungsbeispiel lediglich schematisiert gezeigt. Bevorzugt ist eine Ausgestaltung, bei der die Steuerleitung 29 unmittelbar an eine Anschlussarmatur des Schnellentlüftungsventils 3 angeschlossen ist, sodass bei einer Montage der Radventilanordnung 1 lediglich die Luftversorgungsleitung 5 an den Eingang des Schnellentlüftungsventils 3 angeschlossen werden muss.

Der Durchmesser des Steuerkolbens 22 ist, wie aus Figur 1 deutlich ersichtlich, um ein Mehrfaches größer als der Durchmesser des Ventilkörpers 17. Bei dem dargestellten Ausführungsbeispiel ist der Durchmesser des Steuerkolbens 22 etwa 2,5-mal so groß wie der Durchmesser des Ventilkörpers 17. Die für einen Betrieb des Radventils relevante Fläche des Kolbenbodens des Steuerkolbens 22 ist damit um ein Vielfaches größer als diejenige des Ventilkörpers 17. Diese Untersetzung wird benötigt, damit der Steuerkolben 22 auch bei geringem, in der Luftversorgungsleitung 5 befindlichen Druck - dem Zieldruck der Reifendruckregelung - bewegt werden kann, um den Ventilkörper 17 von dem Ventilsitz 13 zum Öffnen des Radventils 2 abzurücken. Insofern ist die diesbezüglich wirksame Fläche des Kolbenbodens des Steuerkolbens 22 an die zu überwindenden Gegenkräfte angepasst, um die gewünschte Bewegung bei dem jeweils geforderten Mindestreifenfülldruck in der Luftversorgungsleitung 5 vornehmen zu können. Als Gegendruck wirken auf den Steuerkolben 22 die Schraubendruckfeder 24 und für den Fall, dass eine Reifendruckerniedrigung vorgesehen ist, der im Reifenventil 11 anstehende und auf die Rückseite des Ventilkörpers 17 wirkende Reifeninnendruck. Bei dem dargestellten Ausführungsbeispiel sind die diesbezüglich auf eine Steuerkolbenansteuerung Einfluss nehmenden Bauteile - Schraubendruckfeder 24, Größe des Ventilkörpers 17 bzw. Größe der Ventilöffnung 16 -entsprechend aufeinander abgestimmt. Dieses ist gerade bei den Fahrzeugen, bei denen derartige Radventilanordnungen zum Einsatz kommen, selbst ohne den Durchmesser des Steuerkolbens übermäßig groß konzipieren zu müssen, möglich, da Reifen von landwirtschaftlich genutzten Fahrzeugen, wie beispielsweise Traktoren oder deren Anhänger mit einem maximalen Reifenfülldruck von 2 oder 2.5 bar und einem Mindestreifenfülldruck von 0,5 bar gefahren werden. Infolge dessen ist der Druckkontrast, gegen den der Ventilkörper 17 bei einem maximal gefüllten Reifen bewegt werden muss, wenn eine Druckerniedrigung vorgesehen ist, nicht übermäßig hoch.

Somit wird bei dem beschriebenen Konzept der Radventilanordnung in geschickter Weise eine pneumatische Untersetzung genutzt, um trotz einkanaliger Drehdurchführung im Zusammenhang mit einer Reifendruckregelanlage radseitig dennoch ein schaltbares Radventil vorzusehen, um die Radventilanordnung ebenso schalten zu können, wie bei einer herkömmlichen zweikanaligen Radventilanordnung. Aus diesem Grunde kann bei einer Nichtbenutzung der Reifenregelung die Drehdurchführung drucklos bezüglich der Druckdichtungen sein.

Bei dem dargestellten Ausführungsbeispiel ist die Kolbenstange 19 als Hohlstange ausgeführt. Der innere Kanal 30 der Kolbenstange 19 steht in Fluidverbindung mit einem Luftkanal 31, eingebracht in den Deckel 32 des Steuerzylinders 21. Der Luftkanal 31 setzt sich fort in den Führungszapfen 26 und mündet an dessen Stirnseite und steht daher in Fluidkommunikation mit dem Kanal 30 der Kolbenstange 19. Das andere Endes des Luftkanals 31 ist an einen Messanschluss 33 geführt, an dem ein Druckmessgerät anschließbar ist. Bei einem Betrieb der Radventilanordnung 1, wenn dieses an ein Rad angeschlossen ist, befindet sich an dem Messanschluss 33 ein Batterie betriebener Druckmesssensor, der drahtlos seine Messwerte an die fahrzeugseitige Steuereinrichtung zum Steuern der Reifendruckregelanlage sendet. Bei dieser Ausgestaltung befindet sich der Druckmesssensor außerhalb des aus Metall gefertigten Gehäuses des Radventils 2.

In das freie Ende der Kolbenstange 19 ist ein Messröhrchen 34, welches durchaus auch als Messschlauch ausgeführt sein kann, eingesetzt. Dieses reicht bis in den Radventilanschlussstutzen 11 und endet bei dem dargestellten Ausführungsbeispiel in diesem. Es versteht sich, dass mit einer Bewegung des Stellkolbens 19 auch das Messröhrchen 34 bewegt wird.

Über die durch das Messröhrchen 34, den Kanal 30, den Luftkanal 31 bis an den Messanschluss 33 bereitgestellt Messleitung kann der Reifeninnendruck als statischer Luftdruck auch während des Vorganges einer Reifenbefüllung oder einer Reifenentleerung gemessen werden. Interessanterweise hat sich gezeigt, dass eine Erfassung des statischen Luftdruckes auch dann möglich ist, wenn sich die reifenseitige Mündung des Messröhrchens 34 innerhalb des Radventilanschlussstutzens 11 befindet, obwohl an dieser Stelle bei einer Reifendruckregelung besonders hohe Strömungsgeschwindigkeiten herrschen. Die Erfassung des Luftdruckes bzw. des sich ändernden Luftdruckes bei einer Reifenbefüllung oder einer Reifenentleerung erlaubt eine Steuerung des Befüllungs- oder Entleerungsprozesses über einen solchen Druckmesssensor. Dieses erlaubt nicht nur eine exakte Bestimmung des aktuellen Reifeninnendruckes, sondern zudem eine besonders rasche Reifendruckregelung. Bei vielen Reifendruckregelanlagen dienen Proportionalventile dem Zweck einer Einregelung des gewünschten Reifeninnendruckes. Derartige Ventile haben jedoch zum Nachteil, dass mit abnehmenden Druckkontrast zwischen dem Zieldruck (Soll-Druck) und dem IST-Druck die Druckausgleichsgeschwindigkeit abnimmt. Daher wird für manche Anwendungen dieser Art der Druckregelung als zu langsam angesehen. Wird der Druck hingegen über eine an Messanschluss 33 angeschlossene Druckmesssonde erfasst, kann der Reifenbefüllungs- oder Entleerungsprozess exakt dann beendet werden, wenn sich der gewünschte Reifeninnendruck eingestellt hat. Der Befüllungs- bzw. Entleerungsprozess verläuft über die gesamte Zeit der Reifenbefüllung bzw. Reifenentleerung mit maximaler Geschwindigkeit.

Angeschlossen an den Radventilanschlussstutzen 11 ist in das Reifeninnere hineinragend ein Filterkorb 35. Der Filterkorb 35 ist bei dem dargestellten Ausführungsbeispiel als Siebkorb ausgeführt und dient zum Verhindern von Eindringen von der Innenwand des Reifens gelösten Gummipartikeln in das Radventil 2 und auch in das Messröhrchen 34 mit seinem relativ kleinen Durchmesser. Durch den Filterkorb 35 werden wirksam derartige, sich bei einem Fahrbetrieb des Reifens lösende Gummipartikeln gehindert, in den Radventilanschlussstutzen 11 einzudringen, so dass die Dichtigkeit des Radventils 2 und die Durchgängigkeit des Messkanals nicht durch Verschmutzungen beeinträchtigt ist.

Vorteilhaft bei der vorbeschriebenen Erfassung des Reifeninnendruckes mit dem das Radventil durchgreifenden Messkanal ist auch, dass für diese Zwecke lediglich eine einzige Durchbrechung in der Felge des Rades erforderlich ist.

Die Erfindung ist anhand eines Ausführungsbeispiels unter Bezugnahme auf die beigefügten Figuren beschrieben. Ohne den Umfang der geltenden Ansprüche zu verlassen, ergeben sich für einen Fachmann zahlreiche weitere Ausgestaltungen, die Erfindung verwirklichen zu können.

**Bezugszeichenliste**

| | | | |
|---|---|---|---|
| 1 | Radventilanordnung | 31 | Luftkanal |
| 2 | Radventil | 32 | Deckel |
| 3 | Schnellentlüftungsventil | 33 | Messanschluss |
| 4 | Eingang | 34 | Messröhrchen |
| 5 | Luftversorgungsleitung | 35 | Filterkorb |
| 6 | Regeleingang | | |
| 7 | Reifenanschlusskanal | | |
| 8 | Ausblasausgang | | |
| 9 | Radanschluss | | |
| 10 | Felge | | |
| 11 | Radventilanschlussstutzen | | |
| 12 | Umlenkkammer | | |
| 13 | Ventilsitz | | |
| 14 | Vorsprung | | |
| 15 | Steg | | |
| 16 | Ventilöffnung | | |
| 17 | Ventilkörper | | |
| 18 | Dichtscheibe | | |
| 19 | Kolbenstange | | |
| 20 | Umlenkkammerwand | | |
| 21 | Steuerzylinder | | |
| 22 | Steuerkolben | | |
| 23 | Kolbendichtung | | |
| 24 | Schraubendruckfeder | | |
| 25 | Führungsbuchse | | |
| 26 | Führungszapfen | | |
| 27 | Dichtung | | |
| 28 | Steuerkammer | | |
| 29 | Steuerleitung | | |
| 30 | Kanal | | |

## Patentansprüche

1. Radventilanordnung für eine Reifendruckregelanlage eines Fahrzeuges, welche Radventilanordnung (1) ein pneumatisch schaltbares Radventil (2) und ein nach dem Prinzip einer Druckwaage arbeitendes Wechselventil (3) als Entlüftungsventil umfasst dessen Regeleingang (6) an einen zu dem Reifeninneren führenden Reifenanschlusskanal (7) und dessen Eingang (4) als Steuereingang an eine Luftversorgungsleitung (5) anzuschließen sind, wobei das pneumatisch schaltbare Radventil (2) in den Reifenanschlusskanal (7) zum Sperren und Öffnen einer Fluidwegsamkeit zwischen dem Wechselventil (3) und einem der Radventilanordnung (1) zugehörigen Radanschluss (9) eingeschaltet ist, welches Radventil (2) einen durch eine Kolbenstange (19) bewegbaren Ventilkörper (17), der mittels wenigstens eines Federelementes (24) in der Geschlossenstellung gegen den ihm zugeordneten Ventilsitz (13) wirkt und der durch die Kolbenstange (19) in eine von dem Ventilsitz (13) abgerückte Offenstellung bewegbar ist, und einen in einem Steuerzylinder (21) geführten, an die Kolbenstange (19) angeschlossenen Steuerkolben (22) aufweist, welcher Steuerzylinder (21) mit seiner durch die Ansteuerseite des Steuerkolbens (22) begrenzten Steuerkammer (28) über eine Steuerleitung (29) an die Luftversorgungsleitung (5) auf der Eingangsseite des Wechselventils (3) anzuschließen oder angeschlossen ist, wobei der Steuerkolben (22) ausgelegt ist, damit der Ventilkörper (17) zum Öffnen des Radventils (2) von seinem Ventilsitz (13) mit dem in der Luftversorgungsleitung (5) anstehenden Ziel-Reifenfülldruck abrückbar ist, **dadurch gekennzeichnet, dass** die Kolbenstange (19) in einem den Steuerkolben (22) tragenden Abschnitt eine zentrische Führungsbuchse (25) aufweist, in die ein gegenüber der Bewegung der Kolbenstange (19) ortsfester Führungszapfen (26) zur Lagerung der Kolbenstange (19) eingreift.

2. Radventilanordnung nach Anspruch 1, **dadurch gekennzeichnet, dass** die Steuerleitung (29) an eine eingangsseitige Anschlussarmatur des Wechselventils (3) angeschlossen ist, mit welcher Anschlussarmatur das Wechselventil (3) an die Luftversorgungsleitung (5) angeschlossen ist.

3. Radventilanordnung nach Anspruch 1 oder 2, **dadurch gekennzeichnet, dass** das Wechselventil als Schnellentlüftungsventil (3) ausgeführt ist.

4. Radventilanordnung nach einem der Ansprüche 1 bis 3, **dadurch gekennzeichnet, dass** der Durchmesser des Kolbenbodens des Steuerkolbens (22) eine solche Kolbenfläche aufweist, damit zum Öffnen des Radventils durch Abrücken des Ventilkörpers (17) von seinem Ventilsitz (13) das Radventil (2) mit dem in der Luftversorgungsleitung (5) anstehenden Ziel Reifenfülldruck abrückbar ist.

5. Radventilanordnung nach einem der Ansprüche 1 bis 4, **dadurch gekennzeichnet, dass** der Steuerkolben (22) ausgelegt ist, mittels der Kolbenstange (19) den Ventilkörper (17) von dem Ventilsitz (13) bereits dann abzurücken, wenn in der Luftversorungsleitung (5) anstehender Druck dem bestimmungsgemäßen Minimalreifeninnendruck entspricht oder sogar etwas geringer als dieser ist.

6. Radventilanordnung nach Anspruch 5, **dadurch gekennzeichnet, dass** die Fläche des Kolbenbodens des Steuerkolbens (22) einem Mehrfachen der Fläche des Ventilkörpers (17) entspricht.

7. Radventilanordnung nach einem der Ansprüche 1 bis 6, **dadurch gekennzeichnet, dass** der Boden der Führungsbuchse (25) als Anschlag mit der Stirnseite des Führungszapfens (26) ausgeführt ist.

8. Radventilanordnung nach einem der Ansprüche 1 bis 7, **dadurch gekennzeichnet, dass** der Ventilkörper (17) starr mit der Kolbenstange (19) verbunden ist.

9. Radventilanordnung nach einem der Ansprüche 1 bis 8, **dadurch gekennzeichnet, dass** sich der Ventilkörper (17) des Radventils (2) in einem Winkelstück des Reifenanschlusskanals (9) befindet, wobei innerhalb des Winkelstückes ein ringförmiger, zum Radanschluss (9) weisender Ventilsitz (13) vorgesehen ist, durch den die Kolbenstange (19) hindurch greift, und der Ventilkörper (17) durch eine Bewegung des Steuerkolbens (22) in Richtung zu dem Radanschluss (9) hin von seinem Ventilsitz (13) abrückbar ist.

10. Radventilanordnung nach einem der Ansprüche 1 bis 9, **dadurch gekennzeichnet, dass** die Kolbenstange (19) als Hohlstange ausgeführt ist und dass der Führungszapfen (26) einen mit dem Kanal der Kolbenstange (19) in Fluidverbindung stehenden und mit einem Messanschluss (33) verbundenen Luftkanal (31) aufweist.

11. Reifendruckregelanlage für ein Fahrzeug mit einer fahrzeugseitig angeordneten Druckluftquelle, mit einer jedem an die Reifendruckregelanlage angeschlossenen Rad zugeordneten Drehdurchführung zum Übertragen von Druckluft an das den Reifen tragende Rad, mit einer Steuereinrichtung zum Steuern des Prozesses des Anhebens und/oder Absenkens des Reifeninnendruckes der an die Reifendruckregelanlage angeschlossenen Reifen und mit einer jedem an die Reifendruckregelanlage angeschlossenen Rad zugeordneten Radventilanordnung (1) nach einem der Ansprüche 1 bis 10.

## Claims

1. Wheel valve arrangement for a tire pressure control system of a vehicle, which wheel valve arrangement (1) comprises a pneumatically controllable wheel valve (2) and a shuttle valve (3) operating on the pressure balance principle as a bleed valve, the control input (6) of which is to be connected to a tire connection channel (7) leading to the tire interior, and the input (4) of which is to be connected as control input to an air supply line (5), wherein the pneumatically controllable wheel valve (2) is connected into the tire connection channel (7) for closing and opening a fluid path between the shuttle valve (3) and a wheel connection (9) belonging to the wheel valve arrangement (1), which wheel valve (2) has a valve body (17) which can be moved by a piston rod (19) which, by means of at least one spring element (24), acts against the valve seat (13) assigned thereto in the closed position, and which can be moved by the piston rod (19) into an open position moved away from the valve seat (13), and has a control piston (22) guided in a control cylinder (21) and connected to the piston rod (19), which control cylinder (21) is to be connected or is connected by the control chamber (28) of the control cylinder delimited by the drive side of the control piston (22) via the control line (29) to the supply line (5) on the input side of the shuttle valve (3), wherein the control piston (22) is designed in order that the valve body (17) can be moved away from the valve seat (13) of the valve body by means of the target tire filling pressure present in the air supply line (5), in order to open the wheel valve (2), **characterised in that** the piston rod (19) comprises, in a section carrying the control piston (22), a centric guide sleeve (25), into which a guide pin (26) engages, the guide pin being fixed in position in relation to the movement of the piston rod (19), to provide the bearing mounting of the piston rod (19).

2. Wheel valve arrangement according to claim 1, **characterised in that** the control line (29) is connected to an inlet-side connection armature of the shuttle valve (3), with which connection armature the shuttle valve (3) is connected to the air supply line (5).

3. Wheel valve arrangement according to claim 1 or 2, **characterised in that** the shuttle valve is designed as a rapid bleed valve (3).

4. Wheel valve arrangement according to any one of claims 1 to 3, **characterised in that** the diameter of the piston base of the control piston (22) exhibits such a piston surface that, in order to open the wheel valve by moving the valve body (17) away from its valve seat (13), the wheel valve (2) can be moved by the target tire filling pressure present in the air supply line (5)

5. Wheel valve arrangement according to any one of claims 1 to 4, **characterised in that** the control piston (22) is designed, by means of the piston rod (19), to already move the valve body (17) away from the valve seat (13) when the pressure present in the air supply line (5) corresponds to the specified minimum tire internal pressure or is even somewhat less than this.

6. Wheel valve arrangement according to claim 5, **characterised in that** the surface of the piston base (22) of the control piston corresponds to a multiple of the surface of the valve body (17).

7. Wheel valve arrangement according to any one of claims 1 to 6, **characterised in that** the base of the guide sleeve (25) is configured as a stop with the face side of the guide pin (26).

8. Wheel valve arrangement according to any one of claims 1 to 7, **characterised in that** the valve body (17) is rigidly connected to the piston rod (19).

9. Wheel valve arrangement according to any one of claims 1 to 8, **characterised in that** the valve body (17) of wheel valve (2) is located in an angle piece of the tire connection channel (9), wherein, provided inside the angle piece, is a ring-shaped valve seat (13) facing towards the wheel connection (9), through which the piston rod (19) engages, and the valve body (17) can be moved away from its valve seat (13) by a movement of the control piston (22) in the direction towards the wheel connection (9).

10. Wheel valve arrangement according to any one of claims 1 to 9, **characterised in that** the piston rod (19) is configured as a hollow rod, and that the guide pin (26) comprises an air channel (31) which is in a fluid connection with the channel of the piston rod (19) and is connected to a measuring connection (33).

11. Tire pressure control system for a vehicle, with a compressed air source arranged on the vehicle side, with a rotary conduit, assigned to each wheel connected to the tire pressure control system, for conveying compressed air to the wheel carrying the tire, with a control device for controlling the process of raising and/or lowering the tire inner pressure of the tires connected to the tire pressure control system, and with a wheel valve arrangement (1) according to any one of claims 1 to 10, assigned to each wheel connected to the tire pressure control system.

## Revendications

1. Ensemble de soupape de roue pour un système de régulation de pression de pneumatique d'un véhicule, lequel ensemble de soupape de roue (1) comporte une soupape de roue (2) commutable pneumatiquement et un sélecteur de circuit (3) faisant office de soupape de purge d'air fonctionnant selon le principe d'une balance manométrique, dont l'entrée de régulation (6) doit être raccordée à un canal de raccordement (7) au pneumatique qui mène à l'intérieur du pneumatique et dont l'entrée (4), faisant office d'entrée de commande, doit être raccordée à une conduite d'alimentation en air (5), la soupape de roue (2) commutable pneumatiquement étant intégrée au canal de raccordement (7) au pneumatique afin de couper et d'ouvrir une circulation de fluide entre le sélecteur de circuit (3) et un raccordement de roue (9) faisant partie de l'ensemble de soupape de roue (1), laquelle soupape de roue (2) présente un corps de soupape (17), mobile grâce à une tige de piston (19), lequel agit dans la position fermée au moyen d'au moins un élément à ressort (24) contre le siège de soupape (13) qui lui est affecté et qui peut être déplacé par la tige de piston (19) dans une position ouverte écarté du siège de soupape (13), et présente un piston de commande (22), raccordé à la tige de piston (19), mené dans un cylindre de commande (21), lequel cylindre de commande (21) est raccordé ou est à raccorder par son compartiment de commande (28) délimité par le côté commande du piston de commande (22), au moyen d'une conduite de commande (29), à la conduite d'alimentation en air (5) du côté d'entrée du sélecteur de circuit (3), le piston de commande (22) étant conçu de telle sorte que le corps de soupape (17) peut, afin d'ouvrir la soupape de roue (2), s'écarter de son siège de soupape (13) grâce à la pression cible de remplissage du pneumatique en attente dans la conduite d'alimentation en air (5), **caractérisé en ce que** la tige de piston (19) présente sur un tronçon supportant la tige de piston (22) une douille de guidage (25) centrée, dans laquelle s'engage un tourillon de guidage (26) fixe par rapport au mouvement de la tige de piston (19) afin de loger la tige de piston (19).

2. Ensemble de soupape de roue selon la revendication 1, **caractérisé en ce que** la conduite de commande (29) est raccordée à un robinet de raccord du sélecteur de circuit (3) situé côté entrée, grâce auquel robinet de raccord, le sélecteur de circuit (3) est raccordé à la conduite d'alimentation en air (5).

3. Ensemble de soupape de roue selon la revendication 1 ou 2, **caractérisé en ce que** le sélecteur de circuit est conformé en soupape de purge rapide (3).

4. Ensemble de soupape de roue selon l'une des revendications 1 à 3, **caractérisé en ce que** le diamètre du fond de piston du piston de commande (22) présente une telle surface de piston que, pour l'ouverture de la soupape de roue en écartant le corps de soupape (17) de son siège de soupape (13), la soupape de roue (2) peut être écartée grâce à la pression cible de remplissage du pneumatique en attente dans la conduite d'alimentation en air (5).

5. Ensemble de soupape de roue selon l'une des revendications 1 à 4, **caractérisé en ce que** le piston de commande (22) est conformé pour écarter le corps de soupape (17) du siège de soupape (13) à l'aide de la tige de piston (19), dès lors que la pression existant dans la conduite d'alimentation en air (5) correspond à la pression interne minimale de pneumatique qui a été définie ou qu'elle est même légèrement inférieure à cette dernière.

6. Ensemble de soupape de roue selon la revendication 5, **caractérisé en ce que** la surface du fond de piston du piston de commande (22) correspond à un multiple de la surface du corps de soupape (17).

7. Ensemble de soupape de roue selon l'une des revendications 1 à 6, **caractérisé en ce que** le fond de la douille de guidage (25) est conformé en butée avec la surface frontale du tourillon de guidage (26).

8. Ensemble de soupape de roue selon l'une des revendications 1 à 7, **caractérisé en ce que** le corps de soupape (17) est solidarisé de manière rigide avec la tige de piston (19).

9. Ensemble de soupape de roue selon l'une des revendications 1 à 8, **caractérisé en ce que** le corps de soupape (17) de la soupape de roue (2) se trouve dans un coude du canal de raccordement (9) au pneumatique, un siège de soupape (13) annulaire, orienté vers le raccordement à la roue (9) étant prévu à l'intérieur du coude, à travers lequel passe la tige de piston (19) et que le corps de soupape (17) peut s'écarter de son siège de soupape (13), grâce à un mouvement de la tige de piston (22) vers le raccordement à la roue (9).

10. Ensemble de soupape de roue selon l'une des revendications 1 à 9, **caractérisé en ce que** la tige de piston (19) est conformée en tige creuse et que le tourillon de guidage (26) présente un canal d'air (31) en liaison de circulation de fluide avec le canal de la tige de piston (19) et relié à un raccord de mesure (33).

11. Système de régulation de pression de pneumatique pour un véhicule avec une source d'air comprimée disposée du côté véhicule, comportant un passage tournant affecté à chaque roue raccordée au système de régulation de pression de pneumatique destiné à transférer de l'air comprimé à la roue supportant le pneumatique, comportant un dispositif de commande pour piloter le processus d'augmentation et/ou de baisse de la pression interne des pneumatiques raccordés au système de régulation de pression de pneumatique et comportant un ensemble de soupape de roue (1) selon l'une des revendications 1 à 10 affecté à chaque roue raccordée au système de régulation de pression de pneumatique.
